# EUROPEAN PATENT APPLICATION

(11) **EP 3 214 534 A1**
(43) Date of publication of application: **06.09.2017**
(21) Application number: 15854714.1
(22) Date of filing: 22.10.2015
(51) Int. Cl.: G06F 3/048

(54) **METHOD AND DEVICE FOR DISPLAYING OBJECT INFORMATION ON SCREEN DISPLAY APPARATUS**

(30) Priority: 31.10.2014 CN 201410602568
(71) Applicant: Alibaba Group Holding Limited, Grand Cayman (KY)
(72) Inventor: HE, Danli, Hangzhou Zhejiang 311121 (CN); WU, Ming, Hangzhou Zhejiang 311121 (CN)
(74) Representative: Wilson, Alan Stuart
(86) International application number: PCT/CN2015/092515
(87) International publication number: WO 2016/066047

(57) **Abstract**

The present disclosure provides a method for presenting object information on a screen display device, comprising: for a presentation object, displaying one of basic information and additional information of the object on a corresponding display area of the screen display device; receiving an interfacing operation on the screen display device; determining whether a screen display position associated with the interfacing operation is within a switch triggering area corresponding to the object; and in a case that the screen display position associated with the interfacing operation is within the switch triggering area, switching to display other one of the basic information and the additional information of the object on the corresponding display area. The application also provides a device for presenting object information on a screen display device. The technical solution of the present application includes a new concept to present information other than the traditional Hover based information display. Both basic information and additional information of an object could be displayed upon a user request, without disturbance on the browsing paths of the user. Thus, an improved user experience is ensured, especially for use with touch screen devices.

## Description

### Technical Field

The application relates to the field of information display, in particular, to a method for displaying object information on a screen display device. The application also provides a device for displaying object information on a screen display device.

### Background Art

Hover refers to a mouse "hovering" state, by means of which, more additional information (or referred to as complimentary or auxiliary information) can be displayed with respect to the area where the mouse pointer is hovered above. Presently, the "Hover" function is widely used by a website in exhibiting product information. For example, when a user moves and stops (i.e., "hovers") a mouse pointer to a display area of a specific product, additional information of the product will be shown such that the user does not need to click to open a landing page to review such information. Therefore, the additional information is provided without disturbance on the user's browsing path(s).

Hover based information display technology can only be applied to a device (such as a desktop personal computer) that includes a mouse to perform interactive interfacing. For touch screen devices that do not include mouse or similar interfacing device, with which users interface through direct finger touches on the screen, there is no such "Hover" action and the related information display techniques.

Although the additional information that is supposed to be displayed under the Hover state may not be as important as the basic information directly displayed on the screen, as a necessary supplement to the basic information, such additional information still may be required/preferred by users. Therefore, it is undesirable if such additional information is not displayed at all, which initially could be displayed under the Hover state with a mouse based device. Under existing solutions, such additional information, which could be displayed under Hover states, is usually presented with touch screen devices using one of the following approaches:
(1) directly displaying the additional information;
(2) display the additional information in a separate landing page through an added link. For example, a link could be added, leading to webpage of product seller's contact information. When a user clicks on the link, the user will be directed from the current webpage to a landing page showing detailed information including contact information of the seller.

In practical applications, the above two methods both have respective disadvantages:

With regard to the direct display approach (1) above, the screen display will contain too much information with an unconcise interface, which could be burdensome to the browsing users. Further, with limited display space, displaying too much information may naturally lower the exposure rate of the products, which also wastes the display resources.

With regard to the link to landing page approach (2) above, although the original webpage that displays the basic product information could be maintained the same as that using Hover function, users have to click on links to view the additional information of relevant products, which disturbs the original browsing path of the users, increases user cost of browsing, and may cause lose in user resources by directing them to other webpages.

### Summary

The application provides a method for displaying object information on a screen display device, which includes a new solution to present information through a screen display device other than the traditional Hover-based information display. The application further provides a device for displaying object information on a screen display device.

The application provides a method for presenting object information on a screen display device, comprising: for a presentation object, displaying one of basic information and additional information of the object on a corresponding display area of the screen display device; receiving an interfacing operation on the screen display device; determining whether a screen display position associated with the interfacing operation is within a switch triggering area corresponding to the object; and in a case that the screen display position associated with the interfacing operation is within the switch triggering area, switching to display other one of the basic information and the additional information of the object on the corresponding display area.

Optionally, the screen display device is a touch screen device.

Optionally, the switching to display the other one of the basic information and the additional information of the object in the corresponding display area includes: displaying in an animation form a flipping-to-backside process on the corresponding display area; and displaying the other one of the basic information and the additional information of the object on the corresponding display area after the flipping-to-backside process.

Optionally, the displaying the flipping-to-backside process on the corresponding display area includes: flipping about a vertical center line of the corresponding display area to a backside display; and flipping about a horizontal center line of the corresponding display area to the backside display.

Optionally, the switch triggering area includes an area of a control element with a shape of a product tag about a border of the corresponding display area of the object.

Optionally, after the flipping-to-backside process, the control element is displayed at an opposite position in the corresponding display area against a position of the control element before the flipping-to-backside process

Optionally, in an initial display of the object on the corresponding display area, the basic information of the object is displayed.

Optionally, the basic information and the additional information includes at least one of elements of a letter, a graphic item, an image, a table, an animation, a sound, and a control for executing a particular operation related to the object.

Optionally, in a case that the object is a product, the basic information includes at least one of a picture of the product, a name of the product and a price of the product, and the additional information includes at least one of a user review of the product, a sale amount of the product, a button for executing a save-item operation and a button for executing a put-into-shopping cart operation.

Correspondingly, the application further provides a device for presenting object information on a screen display device, comprising: an information display module configured to, for a presentation object, display one of basic information and additional information of the object on a corresponding display area of the screen display device; a touch receiving module configured to receive an interfacing operation on the screen display device; and a switch determination module configured to determine whether a screen display position associated with the interfacing operation is within a switch triggering area corresponding to the object, and in a case that the screen display position associated with the interfacing operation is within the switch triggering area, to switch to display other one of the basic information and the additional information of the object on the corresponding display area.

Optionally, the screen display device is a touch screen device.

Optionally, the switch determination module includes: a determination sub-module configured to determine whether the screen display position associated with the interfacing operation is within the switch triggering area corresponding to the object; and a switch implementation sub-module configured to, in the case that the screen display position associated with the interfacing operation is within the switch triggering area, switch to display the other one of the basic information and the additional information of the object on the corresponding display area; wherein the switch implementation sub-module includes: an animation flipping sub-module configured to display in an animation form a flipping-to-backside process on the corresponding display area; and a switch information displaying sub-module configured to display the other one of the basic information and the additional information of the object on the corresponding display area after the flipping-to-backside process.

Optionally, the animation flipping sub-module is configured to display in the animation form one of two flipping-to-backside processes including: flipping about a vertical center line of the corresponding display area to a backside display; and flipping about a horizontal center line of the corresponding display area to the backside display.

Optionally, the switch triggering area referred to in the determination by the switch determination module includes an area of a control element with a shape of a product tag about a border of the corresponding display area of the object.

Optionally, in a case the switch determination module includes an animation flip sub-module, the animation flip sub-module is configured to display in an animation form a flipping-to-backside process on the corresponding display area, and display the control element at an opposite position on the corresponding display area against a position of the control element before the flipping-to-backside process.

Optionally, the information display module displays (is configured to display) the basic information of the object in an initial display of the object on the corresponding display area.

Optionally, the basic information and the additional information includes at least one of elements of a letter, a graphic item, an image, a table, an animation, a sound, and a control for executing a particular operation related to the object.

Optionally, in a case that the object is a product, the basic information includes at least one of a picture of the product, a name of the product and a price of the product, and the additional information includes at least one of a user review of the product, a sale amount of the product, a button for executing a save-item operation and a button for executing a put-into-shopping cart operation.

Comparing to existing solutions, the present application includes the following advantages. The method for displaying object information on a screen display device mimics the habitual practice of flipping cards or product tags to view the backside information. Basic information or additional information of an object is displayed on a corresponding display area of a screen display device. Based on a received interfacing operation on a switch triggering area, the information display on the corresponding display area will be switched between the basic information and the additional information of the object. The application includes a new solution to present object information, which is different than the traditional Hover-based information display. Using the new solution, both basic information and additional information of an object could be displayed without disturbance on the users' browsing paths, and thus user experience is improved. Particularly, when applied to touch screen devices, the solution can overcome the inconvenience of missing Hover function in touch screen devices.

### Brief Description of the Drawings

FIG. 1 illustrates a flowchart of an embodiment of a method for presenting object information on a screen display device according to the application.
FIG. 2 illustrates a flowchart of switching information display based on an interfacing operation according to an embodiment of the application.
FIG. 3 illustrates an interface design including a switch triggering area with a shape of a product tag according to an embodiment of the present application.
FIG. 4 illustrates a touch on a switch triggering area according to an embodiment of the application.
FIG. 5 illustrates a flipping process of a display area based on an interfacing operation according to an embodiment of the application.
FIG. 6 illustrates an interface design including a display area after a flipping process according to an embodiment of the application.
FIG. 7 illustrates an embodiment of a device for presenting object information on a screen display device according to the application.

### Detailed Description of Embodiments

Some detailed implementation examples are provided herein to facilitate a fully understanding of the application. The application could be implemented with examples other than those described herein. People of ordinary skill in the art may derive similar implementations without deviating from the scope of the application. Hence, the scope of the application shall not be limited to the specific implementation examples described herein.

The application provides a method and a device for presenting object information on a screen display device, which are described herein respectively.

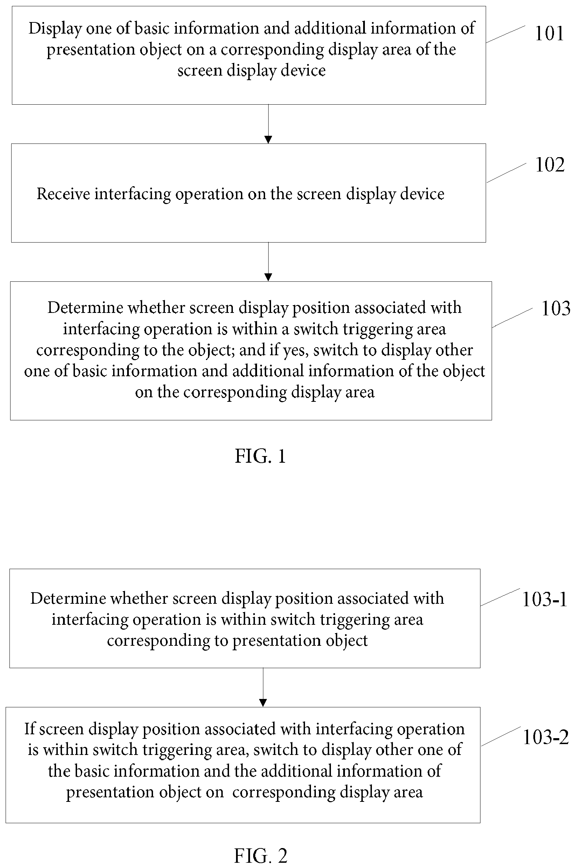

With reference to FIG. 1, a flowchart of an embodiment method for presenting object information on a screen display device is provided. The method includes the following steps:
Step 101: for a presentation object, display one of basic information and additional information of the object on a corresponding display area of the screen display device.

The current method of presenting object information on a screen display device of the application provides a new solution to present object information other than the traditional Hover based techniques. Under the new solution, either basic information or additional information of an object is displayed on a display area of the screen display device; and based on a received interfacing operation on a switch triggering area, the information displayed on the corresponding display area is switched between the basic information and the additional information. Mimicking the habitual practice of flipping cards or product tags to view the backside information, the technical solution displays object information upon user requests, and will not disturb users' browsing paths, which ensures a satisfactory user experience.

As users usually touch screen devices through fingers (or styluses) to effectuate human machine interfacing, there is no mouse Hover function for information presentation with touch screen devices. Using the current method of the application on a touch screen device can overcome the above identified shortcoming and enable user to obtain similar browsing experience as with a mouse based device.

Hence, it is apparent that the present technical solution especially fits for applications with touch screen devices. However, the usage of the technical solution is not limited to touch screen devices. The technical solution could be used with other screen display devices. For example, a desktop PC with a mouse for human machine interfacing may also adopt the present technical solution for presenting object information.

In the application, a presentation object is a relatively broad concept and includes any and all objects, information of which can be presented on a screen display device. For example, a presentation object may be a product listed/recommended by an on-line shopping website.

The object information may include two categories: basic information and additional information. Regarding forms of information presentation, the basic information and the additional information is not limited to word information, but rather may include any one or more of the following elements: a letter, a graphic item, an image, a table, an animation, a sound, and a control including prompting information to prompt a user to perform an operation related to the object (i.e., a user may be prompted to touch the control button and a particular operation related to the object will be executed).

Regarding information contents, the basic information may usually include the overall description of a presentation object or the information concerned by a user viewing the presentation object, e.g., a product image. Additional information may provide further description on some details of the object, on top of the basic information. Additional information may also be referred to as ancillary information or secondary information. For example, for a product recommended by an on-line shopping website, the basic information may include the product image, the product name and/or the price, and so on. And the additional information may include user reviews of the product, order amounts of the product, seller information, a control button for executing a save-item operation and/or a control button for executing a put-into-shopping cart operation.

This step displays one of the basic information and the additional information of a presentation object on a corresponding display area of the screen display device. In example implementation(s), to simultaneously present information of multiple objects on a screen display device, the display interface may be segmented into multiple display areas, each corresponding to one presentation object for displaying basic information/additional information thereof.

In an example practical implementation, usually the basic information of an object may be initially displayed on the corresponding display area. However, depending on the specific scenarios, either one of the basic information and the additional information may be displayed on the corresponding display area. For example, the initial display may be set up based on a state of the most recent viewing of the object by a user.

Step 102: receive an interfacing operation on the screen display device.

In the application, an interfacing operation refers to an interaction between a user and a screen display device, including a user's touch or other gesture operation (e.g., a gesture click) upon a touch screen through fingers and/or stylus and a click event on a display interface of a screen display device through a mouse, and so on. In implementation, such interfacing operations usually correspond to particular events defined in the operating systems and/or platforms implementing the method. The triggering of the particular events within the systems/platforms indicates that the interfacing operation on the screen display device is received.

For example, a click operation on a screen display device through a mouse usually triggers a mouse click event, e.g., a *Click* event or a *MouseClick* event, of a system implementing the present method. Using an algorithm corresponding to the event, e.g., the *onclick()* algorithm, the parameters may be analyzed to obtain the position of the mouse click operation and other associated information.

Similarly, a touch operation on a touch screen usually triggers a corresponding event. For example, in an Android system, a touch operation usually triggers an *OnTouch* event. In the corresponding processing algorithms *OnTouch()* or *OnTouchEvent(),* the *getAction()* function may obtain a type of the touch event, e.g., press down, move, or release, etc. Functions *getRawX()* and *getRawY()* may work together to obtain the coordinate pair information corresponding to the touch operation on the touch screen, i.e., the position of the touch operation. In WP7 system, a *TouchFrameReported* event may be registered to detect a touch event on a touch screen, and the *TouchFrameEventArgs* parameters in the corresponding processing algorithm may be used to obtain the position information of the touch operation.

Step 103: determine whether a screen display position associated with the interfacing operation is within a switch triggering area corresponding to the presentation object. If the screen display position associated with the interfacing operation is within the switch triggering area, information display is switched to the other one of the basic information and the additional information of the object on the corresponding display area.

Upon the received interfacing operation is within the switch triggering area of the presentation object, the step switches the information displayed on the display area corresponding to the object. That is, if the basic information is previously displayed, the switching will turn to display the additional information; if the additional information is previously displayed, the switching will turn to display the basic information. This process may include step 103-1 and step 103-2, which will be described herein with reference to FIG. 2.

Step 103-1: determine whether a screen display position associated with the interfacing operation is within a switch triggering area corresponding to the object. If yes, proceed to execute step 103-2.

The switch triggering area refers to a preset area on the current display interface, where an interfacing operation triggers switching information display for the corresponding object. For each presentation object that requires switching information display between basic information and additional information, a corresponding switch triggering area may be set up on the current displace interface. Such switch triggering area may be positioned within the display area of the object, or may be positioned outside the display area of the object. For example, a switch triggering area may be an area of a control button prompting *"See Backside* ..." positioned at the lower right corner of the display area.

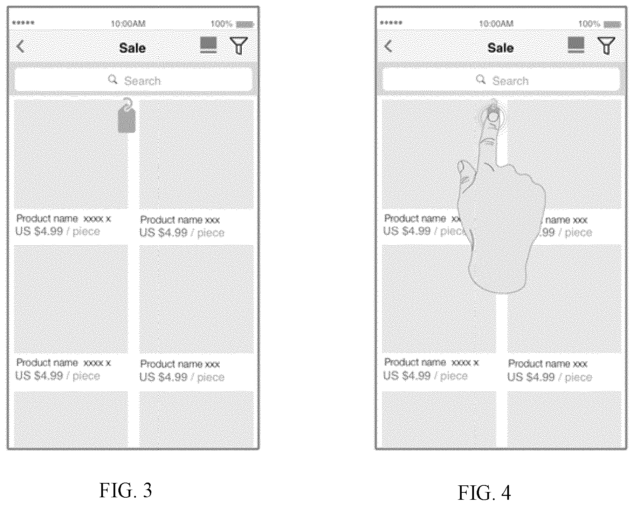

In an implementation example, to make the display interface more user friendly, and better fit users' habits, the switch triggering area may be designed as a control element with a shape of a product tag and positioned about the border of the corresponding display area of the object. Please refer to FIG. 3, which illustrates an interface design including a switch triggering area with a shape of a product tag according to an embodiment.

This step determines whether the received interfacing operation is within the switch triggering area corresponding to the presentation object. Based on a result of this determination, it is determined whether step 103-2 is to be executed to switch information display of the object information. In an example implementation, a position of the interfacing operation obtained through step 102 (e.g., a coordinate pair relative to the upper left corner of the display screen) may be compared with the position information of the switch triggering area(s) on the current interface to determine whether the interfacing operation falls within the switch triggering area of a presentation object.

If a switch triggering area includes control element(s) for event responding and/or processing functions, an interfacing operation on the switch triggering area may trigger the event processing algorithm associated to the control element, e.g., a touch on a control button element may trigger an *onClick()* algorithm associated to the control button element. In this scenario, the above described determination may not need to be performed separately. Instead, the system/platform implementing the method may automatically effectuate a correspondence between the interfacing operation and the control element. Therefore, the function of the subsequently described step 103-2 may be simply added into the processing algorithm associated to the control element.

Step 103-2: switch to display the other one of the basic information and the additional information of the presentation object on the corresponding display area.

When the method proceeds to this step, it means that an interfacing operation on a switch triggering area has been received. In this step, the object information displayed on the display area corresponding to the switch triggering area is switched - if the basic information of the presentation object is displayed previously, now the additional information of the presentation object is displayed on the corresponding display area; if the additional information of the presentation object is displayed previously, now the basic information of the presentation object is displayed on the corresponding display area.

To make the user interface more user friendly, the technical solution of the application provides a preferred implementation approach: displaying the switching process in an animation form. Specifically, it is displayed in an animation form a flipping-to-backside process, and after the flipping-to-backside process, the other one of the basic information and the additional information of the object (i.e., other than the one previously displayed) will be displayed on the corresponding display area. Adopting this implementation approach, it is extended to the screen display devices the habitual user practice of flipping to read the backside information of a card or product tag. Such an interaction process mimics users' real world activity and may effectively improve user experience.

The flipping-to-backside process on the corresponding display area may include a left to right flipping, i.e., flipping about a vertical center line of the corresponding display area to a backside display, or may include an up to down flipping, i.e., flipping about a horizontal center line of the corresponding display area to the backside display.

In a specific implementation, the animated flipping process of the display area may include images of the display area taken at multiple flipping angles. The animated effect may be achieved by displaying in time sequence the multiple images. Depending on the specific systems or development platforms, the animated flipping process may be effectuated through different approaches.

For example, in IOS systems, the *UIKit* directly integrates animation into the *UIView* category so that the animated flipping process may be realized through *UIView.* Specifically, the *CGAffineTransformMakeRotation()* algorithm may be used to set up the rotation amount (i.e., angle(s) of rotation). The following are illustrative code segments:

```
             CGAffineTransform transform = CGAffineTransformldentity; // state
       amount of rotation
             transform = CGAffineTransformMakeRotation(-M_PI/2); // set
       specific value for the rotation amount
             secondView.view.transform=transform; // introduce amount of rotation
```

The API provided by *UIView* may be used to setup and present the animation: *beginAnimation* may be used to start an animation; *commitAnimation* may be used to finish an animation; and animation curves, animation speeds, flip directions, whether to use cache technology, and/or duration of animation presentation may all be set up. The following is a portion of example illustrative codes for executing a flipping operation.

```
       UlView * rotateView=[[UIView alloc] initWithFrame:CGRectMake(20,20, 100, 100)];
              [rotateView setBackgroundColor:[UIColor redColor]];
              [self.view addSubview:rotateView];
              [UIView beginAnimation:nil contex:nil];
              [UIView setAnimationCurve:UIViewAnimationCurveEaselnOut];
              [UIView setAnimationDuration:3.0];
              [UIView setAnimationTransition:UIViewAnimationTransitionFlipFromLeft
        forView:rotateView cache:Yes];
              [UlView commitAnimations];
```

The *setanimationTransition* is used for setting up flip direction. For example, *UIViewAnimationTransitionFlipFromRight* instructs that the display area flips from right to left; and *UIViewAnimationTransitionFlipFromLeft* instructs that the display area flips from left to right.

With the illustrative codes provided above, it is appreciated that in actual implementations, purported adaptations and adjustments of codes and/or parameter setups are required to meet the specific needs. The different approaches/techniques to effectuate the animated flipping process in different systems/platforms will not deviate from the kernel of the application, and the scope of the present application is not limited by any of them.

In an example embodiment, a control element with a shape of a product tag may be displayed at a position about a border of the display area of a presentation object and may be configured to be a switch triggering area. After the animated flipping-to-backside process as described above, in addition to the switched information display between the basic information and the additional information on the corresponding display area, the control element may be displayed at an opposite position on the corresponding display area against a position of the control element before the flipping-to-back side process. This design is to mimic the habitual experience of users in real world,

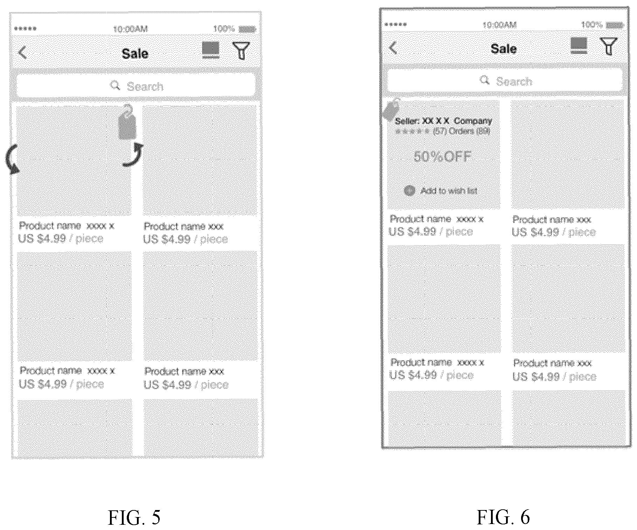

FIGS. 4-6 illustrate, respectively, in scheme and/or design figures, a user touching a switch triggering area, a flipping-to-backside process of a displaying area, and a display area with information display after the flipping-to-backside process. Among the three figures, before the flipping, basic information of a product is displayed on the upper left display area, e.g., product image; after the flipping, additional information of the product is displayed on the same display area, including a control element for executing a specific operation in relation to the product, e.g., a button to add the product to save list (save-item operation). If a user touches the control element with the shape of a product tag, the corresponding display area will flip again, and after the flipping, the basic information of the product will return to be displayed. Using this information presentation approach, the object information is presented to users upon requests, without additional webpage being loaded and without other presentation objects being affected.

It should be appreciated that the application is not limited to the above described animation approach(es) in implementing the switching of information display. In other embodiments, the information displayed on the display area may be directly updated without an animation process, which are also included in the technical solution of the application. Moreover, in the example embodiments, the switch triggering area includes a shape of a product tag and is positioned about the upper right corner of the display area, mimicking physical product tag hanging. In other implementations, the switch triggering area may include different exterior shapes and be positioned at different locations, as long as it can prompt a user to perform an interfacing operation and can perform a display switching based on the user's interfacing operation. Any and all variants in specific implementations do not deviate from the application, and are included in the scope of the application.

In view of the foregoing, the application includes a new technical solution to present object information, which is different than the traditional Hover-based information display. That is, information displayed on the display area corresponding to a presentation object may be switched between basic information and additional information, based on a received interfacing operation upon a switch triggering area. Therefore, both basic information and additional information of an object could be displayed upon user's needs, without disturbance on the users' browsing paths, which improves user experience. Particularly, when applied to touch screen devices, the solution can overcome the inconvenience of missing the Hover function on touch screen devices.

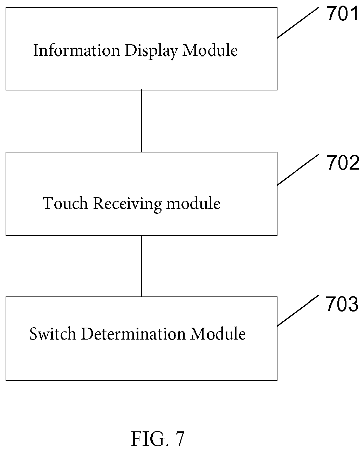

In the above described embodiments, a method for presenting object information on a screen display device is provided. Correspondingly, the application also provides a device for presenting object information on a screen display device. Referring to FIG. 7, an embodiment of a device for presenting object information on a screen display device is illustrated. As the device embodiment is similar to the method embodiment in operation, the relevant description is relatively simple, and reference to the method embodiment may be made to appreciate the device embodiment. The description herein of the device embodiment is for illustrative purposes only.

In an embodiment, a device for presenting object information on a screen display device may comprises: an information display module 701 configured to, for a presentation object, display one of basic information and additional information of the object on a corresponding display area of the screen display device; a touch receiving module 702 configured to receive an interfacing operation on the screen display device; and a switch determination module 703 configured to determine whether a screen display position associated with the interfacing operation is within a switch triggering area corresponding to the object, and in a case that the screen display position associated with the interfacing operation is within the switch triggering area, to switch to display other one of the basic information and the additional information of the object on the corresponding display area.

Optionally, the screen display device is a touch screen device.

Optionally, the switch determination module includes: a determination sub-module configured to determine whether the screen display position associated with the interfacing operation is within the switch triggering area corresponding to the object; and a switch implementation sub-module configured to, in the case that the screen display position associated with the interfacing operation is within the switch triggering area, switch to display the other one of the basic information and the additional information of the object on the corresponding display area; wherein the switch implementation sub-module includes: an animation flipping sub-module configured to display in an animation form a flipping-to-backside process on the corresponding display area; and a switch information displaying sub-module configured to display the other one of the basic information and the additional information of the object on the corresponding display area after the flipping-to-backside process.

Optionally, the animation flipping sub-module is configured to display in the animation form one of two flipping-to-backside processes including: flipping about a vertical center line of the corresponding display area to a backside display; and flipping about a horizontal center line of the corresponding display area to the backside display.

Optionally, the switch triggering area referred to in the determination by the switch determination module includes an area of a control element with a shape of a product tag about a border of the corresponding display area of the object.

Optionally, in a case the switch determination module includes an animation flip sub-module, the animation flip sub-module is configured to display in an animation form a flipping-to-backside process on the corresponding display area, and display the control element at an opposite position on the corresponding display area against a position of the control element before the flipping-to-backside process.

Optionally, the information display module displays (is configured to display) the basic information of the object in an initial display of the object on the corresponding display area.

Optionally, the basic information and the additional information includes at least one of elements of a letter, a graphic item, an image, a table, an animation, a sound, and a control for executing a particular operation related to the object.

Optionally, in a case that the object is a product, the basic information includes at least one of a picture of the product, a name of the product and a price of the product, and the additional information includes at least one of a user review of the product, a sale amount of the product, a button for executing a save-item operation and a button for executing a put-into-shopping cart operation.

Described above are merely some examples of the present application, which are not used to limit the present disclosure. For those skilled in the art, the present disclosure may have various alterations and modifications. Any modification, equivalent replacement, improvement, and the like made within the spirit and principle of the present disclosure shall be included in the scope of the claims of the present disclosure. As such, the coverage scope of the application is defined by the claims instead of any and all disclosed implementation embodiments.

In a typical configuration, the computation device includes one or more Central Processing Units (CPUs), an I/O interface, a network interface, and a memory.

The memory may include computer readable media such as a volatile memory, a Random Access Memory (RAM), and/or non-volatile memory, e.g., Read-Only Memory (ROM) or flash RAM, and so on. The memory is an example of a computer readable medium.

Computer readable media include non-volatile, volatile, mobile and non-mobile media, and can implement information storage through any method or technology. The information may be computer readable instructions, data structures, program modules or other data. Examples of storage media of a computer include, but not limited to, Phase-change RAMs (PRAMs), Static RAMs (SRAMs), Dynamic RAMs (DRAMs), other types of RAMs, ROMs, Electrically Erasable Programmable Read-Only Memories (EEPROMs), flash memories or other memory technologies, Compact Disk Read-Only Memories (CD-ROMs), Digital Versatile Discs (DVDs) or other optical memories, cassettes, cassette and disk memories or other magnetic memory devices or any other non-transmission media, and can be used for storing information accessible to the computation device. According to the definitions herein, the computer readable media exclude transitory media, such as modulated data signals and carriers.

Persons skilled in the art should understand that, the examples of the present disclosure may be provided as a method, a system, or a computer program product. Therefore, the present disclosure may be implemented as a completely hardware example, a completely software example, or an example combining software and hardware. Moreover, the present disclosure may employ the form of a computer program product implemented on one or more computer usable storage media (including, but not limited to, a magnetic disk memory, a CD-ROM, an optical memory, and the like) including computer usable program codes.

## Claims

1. A method for presenting object information on a screen display device, **characterized by** comprising:
for a presentation object, displaying one of basic information and additional information of the object on a corresponding display area of the screen display device;
receiving an interfacing operation on the screen display device;
determining whether a screen display position associated with the interfacing operation is within a switch triggering area corresponding to the object; and
in a case that the screen display position associated with the interfacing operation is within the switch triggering area, switching to display other one of the basic information and the additional information of the object on the corresponding display area.

2. The method of claim 1, **characterized in that** the screen display device includes a touch screen device.

3. The method of claim 1, **characterized in that** the switching to display the other one of the basic information and the additional information of the object in the corresponding display area includes:
displaying in an animation form a flipping-to-backside process on the corresponding display area; and
displaying the other one of the basic information and the additional information of the object on the corresponding display area after the flipping-to-backside process.

4. The method of claim 3, **characterized in that** the displaying the flipping-to-backside process on the corresponding display area includes:
flipping about a vertical center line of the corresponding display area to a backside display; and
flipping about a horizontal center line of the corresponding display area to the backside display.

5. The method of any one of claims 1-4, **characterized in that** the switch triggering area includes an area of a control element with a shape of a product tag about a border of the corresponding display area of the object.

6. The method of claim 5, **characterized in that** after the flipping-to-backside process, the control element is displayed at an opposite position on the corresponding display area against a position of the control element before the flipping-to-backside process.

7. The method of any of claims 1-4, **characterized in that** in an initial display of the object on the corresponding display area, the basic information of the object is displayed.

8. The method of any of claims 1-4, **characterized in that** the basic information and the additional information includes at least one of elements of a letter, a graphic item, an image, a table, an animation, a sound, and a control for executing a particular operation related to the object.

9. The method of claim 8, **characterized in that** in a case that the object is a product, the basic information includes at least one of a picture of the product, a name of the product and a price of the product, and the additional information includes at least one of a user review of the product, a sale amount of the product, a button for executing a save-item operation and a button for executing a put-into-shopping cart operation.

10. A device for presenting object information on a screen display device, **characterized by** comprising:
an information display module configured to, for a presentation object, display one of basic information and additional information of the object on a corresponding display area of the screen display device;
a touch receiving module configured to receive an interfacing operation on the screen display device; and
a switch determination module configured to determine whether a screen display position associated with the interfacing operation is within a switch triggering area corresponding to the object, and in a case that the screen display position associated with the interfacing operation is within the switch triggering area, to switch to display other one of the basic information and the additional information of the object on the corresponding display area.

11. The device of claim 10, **characterized in that** the screen display device includes a touch screen device.

12. The device of claim 10, **characterized in that** the switch determination module includes:
a determination sub-module configured to determine whether the screen display position associated with the interfacing operation is within the switch triggering area corresponding to the object; and
a switch implementation sub-module configured to, in the case that the screen display position associated with the interfacing operation is within the switch triggering area, switch to display the other one of the basic information and the additional information of the object on the corresponding display area;
wherein the switch implementation sub-module includes:
an animation flipping sub-module configured to display in an animation form a flipping-to-backside process on the corresponding display area; and
a switch information displaying sub-module configured to display the other one of the basic information and the additional information of the object on the corresponding display area after the flipping-to-backside process.

13. The device of claim 12, **characterized in that** the animation flipping sub-module is configured to display in the animation form one of two flipping-to-backside processes including:
flipping about a vertical center line of the corresponding display area to a backside display; and
flipping about a horizontal center line of the corresponding display area to the backside display.

14. The device of any one of claims 10-13, **characterized in that** the switch triggering area referred to in the determination by the switch determination module includes an area of a control element with a shape of a product tag about a border of the corresponding display area of the object.

15. The device of claim 14, **characterized in that** in a case the switch determination module includes an animation flip sub-module, the animation flip sub-module is configured to display in an animation form a flipping-to-backside process on the corresponding display area, and display the control element at an opposite position on the corresponding display area against a position of the control element before the flipping-to-backside process.

16. The device of any of claims 10-13, **characterized in that** the information display module displays the basic information of the object in an initial display of the object on the corresponding display area.

17. The device of any of claims 10-13, **characterized in that** the basic information and the additional information includes at least one of elements of a letter, a graphic item, an image, a table, an animation, a sound, and a control for executing a particular operation related to the object.

18. The device of claim 17, **characterized in that** in a case that the object is a product, the basic information includes at least one of a picture of the product, a name of the product and a price of the product, and the additional information includes at least one of a user review of the product, a sale amount of the product, a button for executing a save-item operation and a button for executing a put-into-shopping cart operation.
